# EUROPEAN PATENT APPLICATION

(11) **EP 4 503 454 A1**
(43) Date of publication of application: **05.02.2025**
(21) Application number: 22945290.9
(22) Date of filing: 09.06.2022
(51) Int. Cl.: H04B 3/54

(54) **COMMUNICATION METHOD AND APPARATUS**

(71) Applicant: Huawei Technologies Co., Ltd., Shenzhen, Guangdong 518129 (CN)
(72) Inventor: KONG, Xuepeng, Shenzhen, Guangdong 518129 (CN); PAN, Dao, Shenzhen, Guangdong 518129 (CN); LIN, Qing, Shenzhen, Guangdong 518129 (CN)
(74) Representative: Pfenning, Meinig & Partner mbB
(86) International application number: PCT/CN2022/097895
(87) International publication number: WO 2023/236145

(57) **Abstract**

This application discloses a communication method and an apparatus, and pertains to the field of communication technologies. **In** a communication system in this application, a first node receives a resource scheduling message transmitted by an upper-level node. The resource scheduling message carries template identification information, and the template identification information indicates a target time slot allocation template to be used. The first node determines a transmission time slot of the first node based on indication information that is included in the target time slot allocation template and that is used for allocating time slots to a plurality of nodes. Because a byte length occupied by the template identification information is far less than a byte length occupied by time slot allocation information corresponding to each node, a length of the resource scheduling message can be greatly shortened, and even if a quantity of nodes in the communication system increases, the length of the resource scheduling message does not increase. Therefore, communication resources that need to be occupied for transmission of the resource scheduling message can be reduced, so that more communication resources can be used for data transmission between nodes, and effective utilization of the communication resources is improved.

## Description

### TECHNICAL FIELD

This application relates to the field of communication, and specifically, to a communication method and an apparatus.

### BACKGROUND

Power line communication (power line communication, PLC) is a carrier communication mode in which data is transmitted through power lines. In a PLC network, power line communication devices may communicate with each other in a time division multiplexing manner. Each power line communication device in the PLC network may be referred to as a node. There is one domain master (domain master, DM) node in nodes in one network area. In each communication cycle, the DM node allocates a transmission time slot to each node in the network area based on a resource scheduling message, and the resource scheduling message includes time slot allocation information corresponding to each node.

As a quantity of the power line communication devices in the PLC network continuously increases, a length of the resource scheduling message becomes longer. Increasingly more communication resources need to be occupied for transmission of the resource scheduling message, and resources that can be used for data transmission between the power line communication devices are continuously reduced. Therefore, effective utilization of the communication resources is affected. Similar problems also exist in other communication fields.

### SUMMARY

Embodiments of this application provide a communication method and an apparatus, to reduce communication resources that need to be occupied for transmission of a resource scheduling message, and improve effective utilization of the communication resources.

According to a first aspect, an embodiment of this application provides a communication method, applied to a first node in a communication system. The first node may be any node other than a domain master node in the communication system. The method includes: The first node receives a resource scheduling message transmitted by a second node, determines a target time slot allocation template from at least one time slot allocation template based on template identification information carried in the resource scheduling message, and determines a transmission time slot of the first node based on the target time slot allocation template. The transmission time slot may include a data transmitting time slot or a data receiving time slot.

The second node is an upper-level node of the first node. For example, it is assumed that the first node is a relay node, and the second node may be the domain master node or an upper-level relay node of the first node. Alternatively, it is assumed that the first node is an ordinary node, and the second node may be the domain master node or a relay node. All the foregoing nodes may be understood as communication devices in the communication system.

One or more time slot allocation templates are stored in the first node, and each time slot allocation template includes indication information for allocating time slots to a plurality of nodes in the communication system. The first node determines a target time slot allocation template from a stored time slot allocation template based on the template identification information carried in the resource scheduling message. The target time slot allocation template is a time slot allocation template shared by all nodes. All the nodes determine respective transmission time slots based on the target time slot allocation template, and perform data transmission in the respective transmission time slots, to avoid collision or conflict.

In comparison with that time slot allocation information corresponding to each node is carried in the resource scheduling message, in embodiments of this application, the template identification information is carried in the resource scheduling message, and the template identification information indicates the target time slot allocation template to be used. Because a byte length occupied by the template identification information is far less than a byte length occupied by the time slot allocation information corresponding to each node, a length of the resource scheduling message can be greatly shortened, and even if a quantity of nodes in the communication system increases, the length of the resource scheduling message does not increase. Therefore, communication resources that need to be occupied for transmission of the resource scheduling message can be reduced, so that more communication resources can be used for data transmission between nodes, and effective utilization of the communication resources is improved.

For example, in some embodiments, the template identification information may be template type information. A correspondence between the template type information and the time slot allocation template may be stored in the first node. The first node may search the stored time slot allocation template for the target time slot allocation template based on the template type information carried in the resource scheduling message. In some other embodiments, the template identification information may be a template number. A correspondence between the template number and the time slot allocation template may be stored in the first node. The first node may search the stored time slot allocation template for the target time slot allocation template based on the template number carried in the resource scheduling message.

The template type information or the template number occupies only one byte in the resource scheduling message, so that the length of the resource scheduling message can be greatly shortened. This not only can reduce the communication resources that need to be occupied for transmission of the resource scheduling message, but also can improve an anti-interference capability of the resource scheduling message, and improve robustness of the resource scheduling message.

In some embodiments, the resource scheduling message may be time slot indication information based on a time division multiple access TDMA system. In some other embodiments, the resource scheduling message may be time-frequency resource block allocation indication information based on an orthogonal frequency division multiple access OFDMA system.

In a possible implementation, the resource scheduling message may be carried in a medium access plan MAP frame. For example, the template identification information may be included in a physical frame header field of the MAP frame, or the template identification information may be included in an additional physical frame header field of the MAP frame, or the template identification information may be included in a physical frame payload field of the MAP frame.

When the template identification information is included in the physical frame header field of the MAP frame or the additional physical frame header field of the MAP frame, encoding is performed using an encoding manner corresponding to the physical frame header field or the additional physical frame header field, so that an anti-interference capability of the template identification information can be further improved, and a probability of a decoding failure of the template identification information can be reduced.

In another possible implementation, the resource scheduling message may be carried in a data frame. For example, the template identification information may be included in a physical frame header field of the data frame, or the template identification information may be included in an additional physical frame header field of the data frame, or the template identification information may be included in a physical frame payload field of the data frame.

In another possible implementation, the resource scheduling message may be carried in a management frame. For example, the template identification information may be included in a physical frame header field of the management frame, or the template identification information may be included in an additional physical frame header field of the management frame, or the template identification information may be included in a physical frame payload field of the management frame.

In embodiments of this application, the resource scheduling message not only can be carried in the MAP frame, but also can be carried in the data frame or the management frame and transmitted to each node, so that a quantity of times of transmitting the resource scheduling message can be increased, a case in which the node unsuccessfully receives the resource scheduling information, or the node successfully receives the resource scheduling information but cannot successfully decode the resource scheduling information can be reduced, and the robustness of the resource scheduling message can be further improved.

In a possible implementation, before receiving the resource scheduling message that is transmitted by the second node and that includes information about the time slot allocation template, the first node may receive allocation template information transmitted by any node in the communication system, and store the at least one time slot allocation template carried in the allocation template information, to search for the target time slot allocation template based on the template identification information.

In a possible implementation, the allocation template information may be carried in a MAP frame. The MAP frame may include template location information, and the template location information indicates a location of each time slot allocation template in the allocation template information, so that the first node can obtain different time slot allocation templates from different locations in the allocation template information.

In a possible implementation, it is assumed that the first node is a relay node. The first node may transmit the resource scheduling message to a third node in the transmission time slot of the first node. The third node is a lower-level node of the first node. For example, the third node may be an ordinary node, or the third node may be a lower-level relay node of the first node.

According to a second aspect, an embodiment of this application provides a communication method, applied to a domain master node in a communication system. The communication method includes: transmitting a resource scheduling message to a plurality of nodes in the communication system. The resource scheduling message includes template identification information, and the template identification information indicates a time slot allocation template for allocating time slots to the plurality of nodes.

Because a length of the template identification information is far less than a length of indication information for allocating a time slot to each node, a length of the resource scheduling message can be greatly shortened, communication resources that need to be occupied for transmission of the resource scheduling message are reduced, and effective utilization of the communication resources is improved.

In a possible implementation, before the transmitting a resource scheduling message to a plurality of nodes in the communication system, the domain master node may transmit allocation template information to the plurality of nodes. The allocation template information carries at least one time slot allocation template, so that each node stores the at least one time slot allocation template carried in the allocation template information, to search for a target time slot allocation template based on the template identification information carried in a received resource scheduling message.

According to a third aspect, an embodiment of this application further provides a communication apparatus, applied to a first node in a communication system. The communication apparatus includes a transceiver and a processor.

The transceiver is configured to receive, under control of the processor, a resource scheduling message transmitted by a second node. The second node is an upper-level node of the first node, and the resource scheduling message includes template identification information.

The processor is configured to: determine a target time slot allocation template from at least one time slot allocation template based on the template identification information, where the time slot allocation template includes indication information for allocating time slots to a plurality of nodes in the communication system; and
determine a transmission time slot of the first node based on the target time slot allocation template, where the transmission time slot includes a data transmitting time slot or a data receiving time slot.

In a possible implementation, the template identification information is template type information or a template number.

In a possible implementation, the resource scheduling message is time slot indication information based on a time division multiple access TDMA system, or time-frequency resource block allocation indication information based on an orthogonal frequency division multiple access OFDMA system.

In a possible implementation, the resource scheduling message is carried in a medium access plan MAP frame, and the template identification information is included in a physical frame header, an additional physical frame header field, or a physical frame payload field of the MAP frame; or
the resource scheduling message is carried in a data frame, and the template identification information is included in a physical frame header, an additional physical frame header field, or a physical frame payload field of the data frame; or
the resource scheduling message is carried in a management frame, and the template identification information is included in a physical frame header, an additional physical frame header field, or a physical frame payload field of the management frame.

In a possible implementation, the communication apparatus further includes a memory, and the transceiver is further configured to:
before receiving the resource scheduling message that is transmitted by the second node and that includes information about the time slot allocation template, receive, under the control of the processor, allocation template information transmitted by any node in the communication system. The allocation template information carries at least one time slot allocation template.

The memory is configured to store the at least one time slot allocation template under the control of the processor.

In a possible implementation, the allocation template information is carried in a MAP frame, the MAP frame includes template location information, and the template location information indicates a location of each time slot allocation template in the allocation template information.

In a possible implementation, the first node is a relay node, and the transceiver is further configured to transmit the resource scheduling message to a third node in the data transmission time slot of the first node under the control of the processor. The third node is a lower-level node of the first node.

According to a fourth aspect, an embodiment of this application further provides a communication apparatus, including a transceiver and a processor. The transceiver is configured to transmit a resource scheduling message to a plurality of nodes in a communication system under control of the processor. The resource scheduling message includes template identification information, and the template identification information indicates a time slot allocation template for allocating time slots to the plurality of nodes.

In a possible implementation, the transceiver may be further configured to transmit allocation template information to the plurality of nodes in the communication system. The allocation template information carries at least one time slot allocation template, so that each node stores the at least one time slot allocation template carried in the allocation template information, to search for a target time slot allocation template based on the template identification information carried in the received resource scheduling message.

According to a fifth aspect, an embodiment of this application further provides a communication apparatus. The communication apparatus includes corresponding functional modules, respectively configured to implement steps in the method provided in the first aspect. For details, refer to detailed descriptions in the method examples. Details are not described herein. The functions may be implemented by hardware, or may be implemented by hardware executing corresponding software. The hardware or software includes one or more modules corresponding to the foregoing functions. For example, the communication apparatus may include a receiving unit and a determining unit. The receiving unit is configured to receive a resource scheduling message transmitted by a second node. The second node is an upper-level node of a first node; and the resource scheduling message includes template identification information. The determining unit is configured to: determine a target time slot allocation template from at least one time slot allocation template based on the template identification information, and determine a transmission time slot of the first node based on the target time slot allocation template. The time slot allocation template includes indication information for allocating time slots to a plurality of nodes in a communication system, and the transmission time slot includes a data transmitting time slot or a data receiving time slot.

According to a sixth aspect, an embodiment of this application further provides a communication apparatus. The communication apparatus includes corresponding functional modules, respectively configured to implement steps in the method provided in the second aspect. For details, refer to detailed descriptions in the method examples. Details are not described herein. The functions may be implemented by hardware, or may be implemented by hardware executing corresponding software. The hardware or software includes one or more modules corresponding to the foregoing functions. For example, the communication apparatus may include a transmitting unit, configured to transmit a resource scheduling message to a plurality of nodes in a communication system. The resource scheduling message includes template identification information, and the template identification information indicates a time slot allocation template for allocating time slots to the plurality of nodes.

According to a seventh aspect, an embodiment of this application further provides a communication system, including any communication apparatus provided in the third aspect and the communication apparatus provided in the fourth aspect.

According to an eighth aspect, this application provides a computer-readable storage medium. The computer-readable storage medium stores a computer program or instructions. When the computer program or the instructions are executed by a terminal device, the terminal device is enabled to perform any method provided in the first aspect or any method provided in the second aspect.

According to a ninth aspect, this application provides a computer program product. The computer program product includes a computer program or instructions. When the computer program or the instructions are executed by a terminal device, any method provided in the first aspect or any method provided in the second aspect is implemented.

For technical effects that can be achieved in any one of the third aspect to the ninth aspect, refer to descriptions of beneficial effects in the first aspect or the second aspect. Details are not described herein.

### BRIEF DESCRIPTION OF DRAWINGS

FIG. 1 is a schematic diagram of a structure of a power line communication system according to an embodiment of this application;
FIG. 2 is a schematic diagram of a structure of another power line communication system according to an embodiment of this application;
FIG. 3 is a schematic diagram of a MAC cycle in a power line communication process;
FIG. 4 is a schematic diagram of a MAP frame including allocation template information according to an embodiment of this application;
FIG. 5 is a schematic diagram of a MAP INFO field including allocation template information according to an embodiment of this application;
FIG. 6 is a schematic diagram of a time slot allocation template according to an embodiment of this application;
FIG. 7 is a flowchart of interaction of a communication method according to an embodiment of this application;
FIG. 8 is a schematic diagram of a MAP frame including template identification information according to an embodiment of this application;
FIG. 9 is a flowchart of a communication method according to an embodiment of this application;
FIG. 10 is a flowchart of another communication method according to an embodiment of this application;
FIG. 11 is a schematic diagram of a communication apparatus according to an embodiment of this application; and
FIG. 12 is a schematic diagram of another communication apparatus according to an embodiment of this application.

### DESCRIPTION OF EMBODIMENTS

To make objectives, technical solutions, and advantages of embodiments of this application clearer, the following describes embodiments of this application in detail with reference to accompanying drawings. Terms used in implementations of this application are merely used for explaining specific embodiments of this application, and are not intended to limit this application. Clearly, the described embodiments are merely a part rather than all of embodiments of this application. All other embodiments obtained by a person of ordinary skill in the art based on embodiments of this application without creative efforts shall fall within the protection scope of this application.

Before the specific solutions provided in embodiments of this application are described, some terms in this application are generally explained and described, to facilitate understanding by a person skilled in the art, but not to constitute a limitation on the terms in this application.
(1) A PLC network is also referred to as a power line network or a carrier communication network, and is a communication network that uses power lines as communication media to implement information aggregation, transmission, and interaction that are of power users. Devices in the PLC network may include network devices such as a power line, a gateway device, a plurality of power line communication devices, and a terminal. In addition to transmitting current and driving an electric appliance, the power line may be further configured to provide an internet access. The power line communication device may be configured to provide a network signal for a network device such as a terminal, and the plurality of power line communication devices are connected to the internet through a gateway device and a power line. In the PLC network, the power line communication devices may communicate with each other in a time division multiplexing manner.
(2) A power line communication modem (modern) is a type of a power line communication device, may also be referred to as a power line communication modem, and is a common name of a modem (modem) for a broadband internet access through power lines. Existing power lines and sockets in home or office are used for forming a network to connect a computer, a broadband internet access device, a set-top box, an audio device, a monitoring device, and another intelligent electrical device, and perform data, voice, and video transmission between devices. The power line communication modem has a plug-and-play feature and can perform digital signal transmission through common home power lines.

In embodiments of this application, "a plurality of" means two or more. In view of this, "a plurality of" may also be understood as "at least two" in embodiments of this application. "At least one" may be understood as one or more, for example, understood as one, two, or more. For example, "including at least one" means "including one, two, or more", and which is included is not limited. For example, if at least one of A, B, and C is included, A, B, C, A and B, A and C, B and C, or A, B, and C may be included. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" mentioned in embodiments of this application are used for distinguishing between a plurality of obj ects, and are not used for limiting a sequence, a time sequence, a priority, or an importance degree of the plurality of objects.

The communication method provided in embodiments of this application is applicable to a PLC network or a PLC communication system, or is applicable to another wired communication field or wireless communication field. The following uses the PLC network as an example for description.

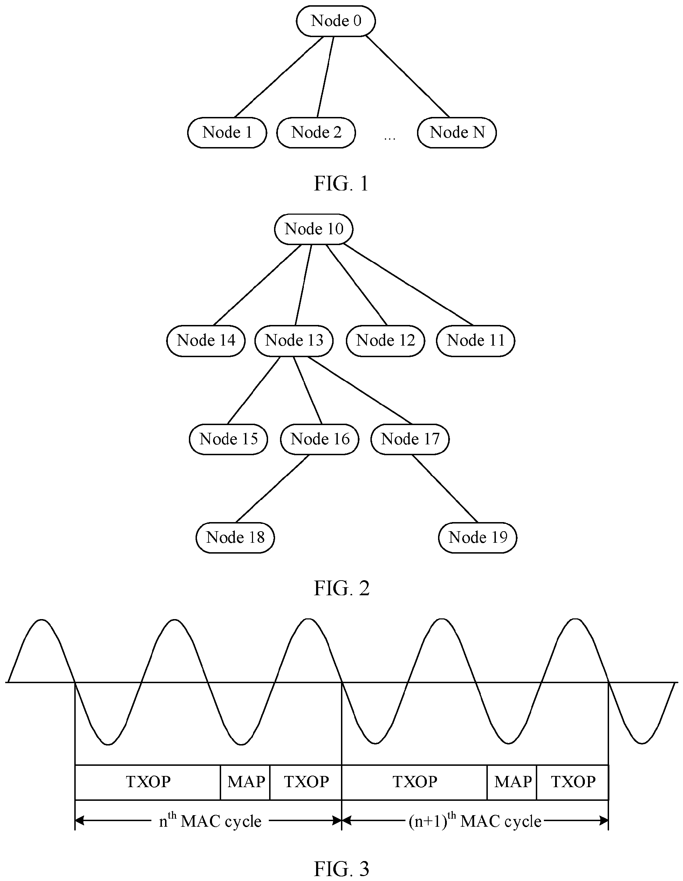

For example, FIG. 1 is a schematic diagram of a PLC communication system. In the PLC communication system shown in FIG. 1, each power line communication device in a power line network area may be referred to as a node. One DM exists in all nodes in one area. All nodes except the DM are ordinary nodes. The ordinary node is also referred to as a non-DM node or an ordinary station (station, STA). For example, in FIG. 1, a node 0 is a DM, and a node 1 to a node N are ordinary nodes. One DM may be separately connected to a plurality of ordinary nodes. The DM may be referred to as an upper-level node of each ordinary node, and each ordinary node may be referred to as a lower-level node of the DM. The DM is a master node on the PLC network and is responsible for implementing functions such as networking control, and network maintenance and management.

In some other PLC communication systems, one or more levels of relay nodes may be further disposed between the DM and the ordinary node. The relay node is configured to perform data relay forward between the DM and the ordinary node or between the ordinary node and the ordinary node, and may also be referred to as a proxy node. As shown in FIG. 2, a node 10 is a DM, a node 13, a node 16, and a node 17 are relay nodes, and other nodes are ordinary nodes. An application scenario of a PLC communication system shown in FIG. 2 may include a scenario in which long-distance transmission is required. For example, an airport navigation light uses the PLC network to control lights. A longest power line on the runway is several kilometers, but a farthest distance of PLC single-hop communication is about 1.2 km. Therefore, multi-level relay nodes are needed to control remote lights. For another example, the PLC network is used for controlling street lamps. Because street lamps are extended for a far distance, to implement unified control of the street lamps, relay nodes are also needed to forward control information.

The PLC network can use existing power lines to perform data or information transmission in a digital signal processing method. For example, the PLC network may use an existing low-frequency (50/60 Hz) power line to transmit bandwidth data. Compared with a digital subscriber line (digital subscriber line, DSL) technology that uses telephone lines, a cable modem (cable modem, CM) uses coaxial cable lines of cable television. In a power line communication technology, additional network lines are basically not needed to be laid. In addition, the power lines cover a much wider area than lines of other types of carriers.

It should be noted that, the PLC communication system shown in FIG. 2 is merely an example, and in addition to a first-level node at which the DM is located and a last-level ordinary node, there may be one or more relay nodes in nodes at other levels. Network structures shown in FIG. 1 and FIG. 2 are not only applicable to a PLC network, but also applicable to another wired communication network or wireless communication network.

Because each node usually transmits a message in a broadcast manner, only a node whose distance is within a specific range can receive the broadcast message, and a node that cannot receive the broadcast message can receive only a message forwarded by an upper-level node of the node. Certainly, each node may alternatively transmit a message in a unicast manner. When transmitting the message in the unicast manner, the node may carry an identifier of a target node in a transmitted message header (header).

Communication protocols of the PLC network mainly include standard protocols such as the IEEE Homeplug AV and the ITU-T G.hn. The ITU-T G.hn protocol is applicable to centrally management of power line communication devices in the PLC network. In a design of the ITU-T G.hn protocol, based on a feature of a channel of the power line, two alternating current cycles of the power line are used as a medium access control (medium access control, MAC) cycle of protocol communication. As shown in FIG. 3, in each MAC cycle, a DM generates and distributes a medium access plan (medium access plan, MAP) frame. The MAP frame may also be referred to as a MAP management frame or a MAPA management frame, and is used for formulating a scheduling policy in a next MAC cycle. That is, in the next MAC cycle, a time period except a time period used for transmission of the MAP frame is divided into different time periods, and the different time periods are respectively allocated to nodes for data transmission. It may also be understood that, the DM allocates a corresponding time slot in the next MAC cycle to each node in the PLC network based on the MAP frame, and each node performs data transmission in the time slot corresponding to the node. The data includes a digital signal. Therefore, the MAP frame includes time slot allocation information corresponding to each node.

The MAP frame is different in different MAC cycles. For example, the DM may transmit, in a time period used for transmission of a MAP frame in each MAC cycle, the MAP frame to each ordinary node in a broadcast manner; or the DM may transmit a MAP frame to a relay node, and the relay node transmits the received MAP frame to a lower-level node, where the lower-level node may be a relay node or an ordinary node, until each ordinary node receives the MAP frame. In addition to a time period that can be used for transmission of a MAP frame, each MAC cycle may further include a time period used for data transmission. The time period used for data transmission may be referred to as a transmission opportunity (transmission opportunity, TXOP). Each node performs, in a time period corresponding to a TXOP, data transmission in a transmission time slot corresponding to each node based on time slot allocation information in a MAP frame.

Because the MAP frame includes the time slot allocation information corresponding to each node, as a quantity of power line communication devices in the PLC network continuously increases, that is, a quantity of nodes in the PLC network continuously increases, a length of the MAP frame becomes longer. Increasingly more communication resources need to be occupied for transmission of the MAP frame, and resources that can be used for data transmission between the power line communication devices are continuously reduced. Therefore, benefits of the power line communication are affected.

On this basis, an embodiment of this application provides a communication method. The communication method is applicable to the PLC communication system shown in FIG. 1 or FIG. 2. In the communication method, a DM allocates time slots to a plurality of nodes in a PLC system based on a resource scheduling message. The DM generates and transmits the resource scheduling message to the plurality of nodes in the PLC system. The resource scheduling message includes template identification information, the template identification information is used for determining a target time slot allocation template, and the target time slot allocation template includes indication information for allocating a time slot to each node in a power line communication network. Each node in the PLC system determines, based on the target time slot allocation template, a transmission time slot corresponding to each node.

Because the resource scheduling message includes the template identification information but does not need to include time slot allocation information corresponding to each node, and a byte length occupied by the template identification information is far less than a byte length occupied by the time slot allocation information corresponding to each node, a length of the resource scheduling message is shortened, and even if a quantity of nodes in the PLC network increases, the length of the resource scheduling message does not increase. Therefore, communication resources occupied for transmission of the resource scheduling message can be reduced, so that more communication resources can be used for data transmission between nodes, and benefits of power line communication is improved.

In embodiments of this application, one or more time slot allocation templates may be preset. The time slot allocation template includes indication information for allocating time slots to the plurality of nodes in the power line communication system in one MAC cycle. For example, each MAC cycle may include a plurality of time periods, that is, the foregoing TXOPs used for data transmission. The TXOP may be classified into two types: a contention-free transmission opportunity (contention-free TXOP, CFTXOP) and a shared transmission opportunity (share TXOP, STXOP). The CFTXOP is a single-node exclusive transmission opportunity, and the STXOP is a multi-node shared transmission opportunity. In a time period corresponding to the STXOP, a plurality of nodes may share the time period in a manner of scheduling transmission time slots (time slots, TSs) through polling. Generally, a time length of the TS is less than a time length of the TXOP. The TS scheduled by the STXOP is classified into two types: a contention-free time slot (contention-free time slot, CFTS) and a contention-based time slot (contention-based time slot, CBTS). The CFTS is a time slot designated to be allocated to a specific node in the power line communication system, and the CBTS is a time slot that can be preempted by each node in the power line communication system through contention. When the STXOP schedules the TS variable-length scheduling may be used. For any TS, if a node occupying the TS has data that needs to be transmitted, it may be determined, based on a length of the data, when to end the TS. If the node occupying the TS has no data that needs to be transmitted, a time length of the TS is 35.84 µs, that is, if no data is transmitted within 35.84 µs after the TS starts, a next TS is entered.

After networking of the PLC communication system is stable, a plurality of time slot allocation templates may be preset. For example, with reference to a service feature of a network, different types of templates may be respectively set for different cases, such as a case in which a controller node has a priority, a case in which an uplink node has a priority, a case in which an upgrade service has a priority, and a case of low power consumption. For example, for a type of a template for the case in which a controller node has a priority, more STXOPs and CBTSs may be allocated in a cycle, to increase preemption opportunities of burst packets, and reduce an interval for transmitting a packet in a preemption manner, so that a probability of conflict occurred when a node preempts a time slot is reduced. For a type of a template for the case in which an uplink node has a priority, more CFTS time slots of a designated node may be allocated, where the designated node may be a node having a periodic uplink fixed service, to ensure a traffic bandwidth of the uplink fixed service.

In some embodiments, the DM may separately transmit the plurality of set time slot allocation templates to the nodes in the power line communication system based on the allocation template information. In some other embodiments, the DM may transmit, based on the allocation template information, the plurality of set time slot allocation templates to relay nodes that are located in a signal radiation range of the DM, and then each relay node forwards the allocation template information to each ordinary node. In some other embodiments, the DM may transmit, based on the allocation template information, the plurality of set time slot allocation templates to a part of ordinary nodes in the power line communication system, and then the ordinary node forward the allocation template information to another ordinary node, so that each ordinary node stores a time slot allocation template. That is, a specific ordinary node in the power line communication system may receive a time slot allocation template transmitted by any node in the power line communication system. In another embodiment, each node in the power line communication system may alternatively obtain the time slot allocation template in another manner. For example, each node may read a plurality of time slot allocation templates stored in a mobile storage medium.

In some embodiments, the allocation template information may be carried in a MAP frame for transmission. In some other embodiments, the allocation template information may alternatively be carried in a data frame or a management frame for transmission.

For example, the allocation template information may be carried in a MAP frame and transmission is performed between nodes. The MAP frame may include template location information, and the template location information indicates a location of each time slot allocation template in the allocation template information. For example, the allocation template information may be located in a physical frame payload (payload) field of the MAP frame, and the template location information may be located in an addon domain field of a payload of the MAP frame, and indicates a start location, an end location, and template identification information that are of each time slot allocation template. The template identification information may be a template number, and the template number may also be referred to as a template ID.

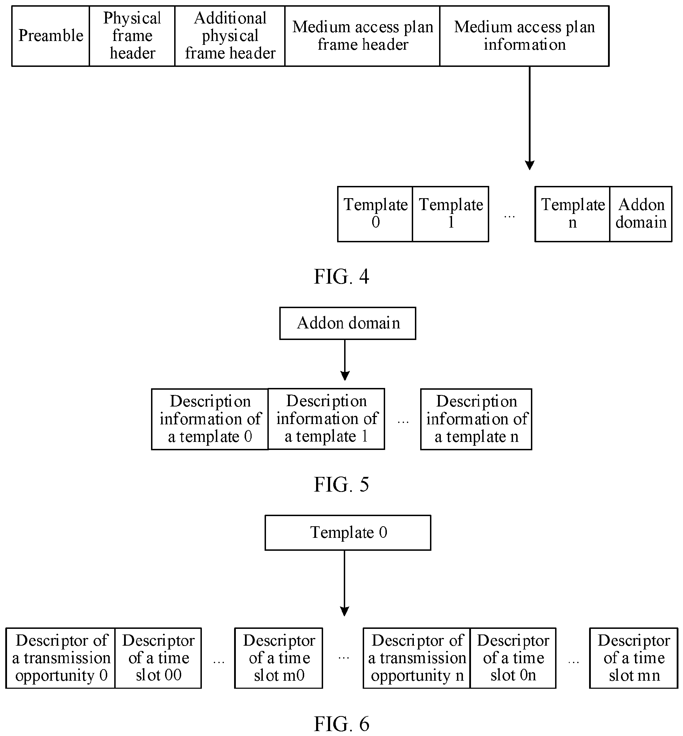

For example, FIG. 4 is a schematic diagram of composition of fields of a MAP frame including allocation template information. As shown in FIG. 4, the MAP frame may include the following fields: a preamble (preamble), a physical frame header (physical header, PHY HDR), an additional physical frame header (PHY HDR+), a medium access plan frame header (MAP header, MAP HDR), and medium access plan information (MAP information, MAP INFO).

The preamble may include field description information for the MAP frame, for example, indicate a quantity of fields included in the MAP frame, a start location and an end location that are of each field, and the like. The PHY HDR and the PHY HDR+ may include frame indication information of the MAP frame, for example, indicate information carried in each field in the MAP frame. The MAP HDR and the MAP INFO may form a payload field of the MAP frame. The MAP HDR may include description information of the MAP INFO of the MAP frame, for example, specific meaning and a quantity of descriptors carried in the MAP INFO.

The allocation template information and the template location information may be carried in the MAP INFO. It is assumed that (n+1) time slot allocation templates of different types are set, and a MAP INFO field may include content of a template 0, and a template 1 to a template n. The template location information may be carried in an addon domain of the MAP INFO field, and indicates a location of each time slot allocation template in the MAP INFO field. As shown in FIG. 5, the addon domain of the MAP INFO field includes description information of the template 0, and description information of the template 1 to description information of the template n. For example, description information of a template i may include a byte start (byte start) location, a byte end (byte end) location, and a template ID that are of the template i, where a value of i may be an integer in [0, n]. The byte start location indicates a start location of the template i in the MAP INFO field, and the byte end location indicates an end location of the template i in the MAP INFO field. The addon domain of the MAP INFO field may also be understood as an addon domain of a payload field.

For example, FIG. 6 shows content included in the template 0. The following uses the template 0 as an example to describe composition of the time slot allocation template. The template 0 includes description information of a transmission opportunity 0 to description information of a transmission opportunity n. The description information of the transmission opportunity 0 may be referred to as CFTXOP0 des, and the description information of the transmission opportunity n may be referred to as CFTXOPn des. That is, the template 0 includes description information of (n+1) CFTXOPs, and description information of each CFTXOP may indicate a time length of a corresponding CFTXOP. The template 0 further includes description information of (n+1) STXOPs, and each STXOP may include (m+1) time slots. Description information of a time slot 00 to description information of a time slot m0 that are in the template 0 are description information of (m+1) time slots included in an STXOP0, and description information of a time slot 0n to description information of a time slot mn that are in the template 0 are description information of (m+1) time slots included in an STXOPn. The description information of the time slot 00 may be referred to as TS00 des, the description information of the time slot m0 may be referred to as TSm0 des, the description information of the time slot 0n may be referred to as TS0n des, and the description information of the time slot mn may be referred to as TSmn des. Description information of each time slot may indicate whether a type of a corresponding time slot is a CFTS or a CBTS. If a specific time slot is the CFTS, description information of the time slot further indicates a node to which the time slot is allocated, that is, a node that can perform data transmission in the time slot.

The foregoing content may also be understood as follows: The template 0 divides a time period used for data transmission in one MAC cycle into 2(n+1) TXOPs, where the 2(n+1) TXOPs include (n+1) CFTXOPs and (n+1) STXOPs, and each STXOP further includes (m+1) TSs. In the template 0 shown in FIG. 6, a quantity of CFTXOPs is equal to a quantity of STXOPs, and CFTXOPs and STXOPs are arranged at intervals. In another embodiment, the CFTXOPs and the STXOPs configured in the template may alternatively not be arranged at intervals. For example, one STXOP may be configured after several consecutive CFTXOPs, or one CFTXOP may be configured after several consecutive STXOPs, or the CFTXOP and the STXOP are arranged irregularly. The quantity of CFTXOPs and the quantity of STXOPs configured in the template may be different. For example, a larger quantity of CFTXOPs and a smaller quantity of STXOPs may be configured, or a larger quantity of STXOPs and a smaller quantity of CFTXOPs may be configured.

The foregoing uses the template 0 as an example to describe the composition of the time slot allocation template. Content included in another time slot allocation template is similar to content included in the template 0, and details are not described herein.

Each node receives and stores a time slot allocation template transmitted by the DM based on the MAP frame, to determine, in the MAC cycle based on the time slot allocation template, a transmission time slot corresponding to each node, and implement a power line communication process.

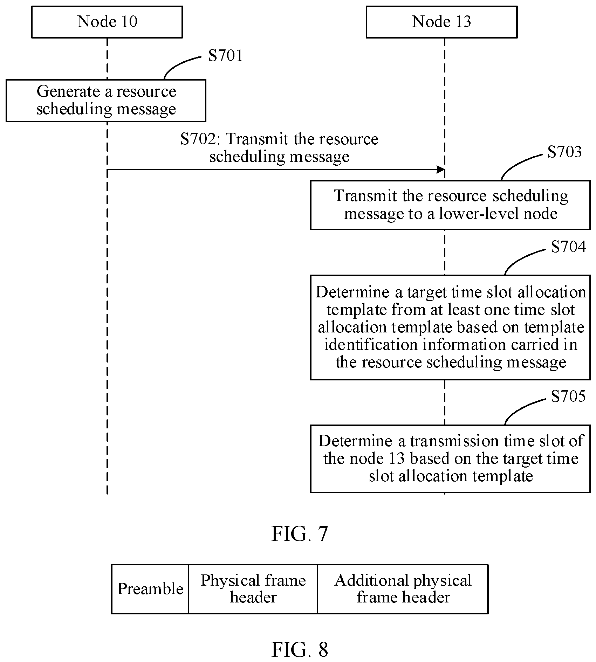

The following uses an interaction process between the node 10 and the node 13 shown in FIG. 2 as an example to describe an execution process of the communication method according to embodiments of this application in MAC cycles. The node 10 is a DM, and the node 13 is a relay node. FIG. 7 is a flowchart of interaction between the node 10 and the node 13. As shown in FIG. 7, the communication method according to embodiments of this application may include the following steps.

S701: The node 10 generates a resource scheduling message.

The node 10 is a DM. In an n^{th} MAC cycle, the DM may generate the resource scheduling message based on a communication service requirement, to indicate a time slot scheduling policy of a next MAC cycle or a k^{th} MAC cycle after the n^{th} MAC cycle, where k is a positive integer, and the n^{th} MAC cycle is a general term, and may refer to any MAC cycle. The resource scheduling message may include template identification information. The template identification information may be template type information, or may be a template number, that is, a template ID.

S702: The node 10 transmits the resource scheduling message.

In some embodiments, the resource scheduling message may be time slot indication information based on a time division multiple access (time division multiple access) TDMA system. In some other embodiments, the resource scheduling message may be time-frequency resource block allocation indication information based on an orthogonal frequency division multiple access (orthogonal frequency division multiple access) OFDMA system.

For example, the DM may transmit the resource scheduling message in a broadcast manner, and each node within a broadcast signal radiation range of the DM may receive the resource scheduling message transmitted by the DM. For example, the node 11, the node 12, the node 13, and the node 14 shown in FIG. 2 each may receive the resource scheduling message transmitted by the DM. Because the node 13 is a relay node, after receiving the resource scheduling message, the node 13 forwards the resource scheduling message to a lower-level node. The node 11, the node 12, and the node 14 are ordinary nodes. After receiving the resource scheduling message, the node 11, the node 12, and the node 14 perform, except forwarding the resource scheduling message to other nodes, actions similar to other actions performed by the node 13 after the node 13 receives the resource scheduling message. The following uses the node 13 as an example for description.

In some embodiments, the resource scheduling message may be carried in a MAP frame for transmission. For example, FIG. 8 is a schematic diagram of composition of fields of a MAP frame. As shown in FIG. 8, the MAP frame may include the following fields: a preamble (preamble), a physical frame header (PHY HDR), and an additional physical frame header (PHY HDR+).

The resource scheduling message may be included in the PHY HDR+ field. In addition to template identification information, the resource scheduling message may further include other information such as template effective cycle information. The template effective cycle information indicates a MAC cycle in which a time slot allocation template corresponding to the template identification information takes effect. For example, table 1 shows composition of a PHY HDR+ field.

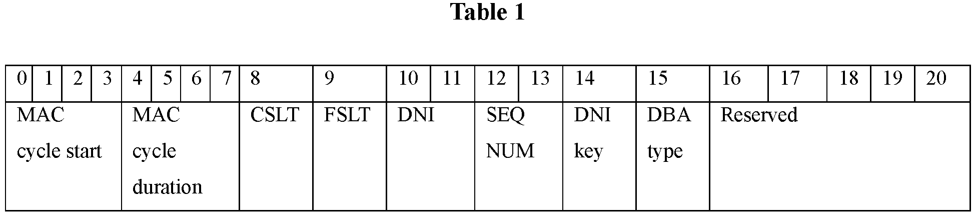

As shown in table 1, the PHY HDR+ field may include 21 bytes (bytes), where
bytes 0 to 3 represent a MAC cycle start (MAC cycle start) location, and indicate a current MAC cycle start location.

Bytes 4 to 7 represent MAC cycle duration (MAC cycle duration), and indicate current MAC cycle duration.

A byte 8 represents a quantity of cycles applicable to a current template, which may also be referred to as current time slot table life time (current schedule life time, CSLT), and indicates a quantity of cycles that can be continuously used by a time slot allocation template specified in a MAP frame. For example, if the CSLT is 2, this indicates that the time slot allocation template specified in the MAP frame can be used in two consecutive MAC cycles.

A byte 9 represents a quantity of cycles for a template to wait, which may also be referred to as future time slot table life time (future schedule life time, FSLT), and indicates that the time slot allocation template specified in the MAP frame can be used from a k^{th} MAC cycle after the current MAC cycle. For example, if the FSLT is 1, this indicates that the time slot allocation template specified in the MAP frame can be used from a 1^{st} MAC cycle after the current MAC cycle, that is, can be used from a next MAC cycle.

Bytes 10 to 11 represent a domain name identifier (domain name identifier, DNI), and identify a DM node that generates the MAP frame.

Bytes 12 to 13 represent a sequence number (sequence number, SEQ NUM), and identify a quantity of times the MAP frame is forwarded.

A byte 14 represents a domain name key (DNI key), and the DNI key is a parameter used in a process of hashing of a domain name.

A byte 15 represents a template type, which may also be referred to as a dynamic bandwidth allocation type (dynamic bandwidth allocation type, DBA type), and identifies a type of the time slot allocation template specified in the MAP frame. For example, the type of the time slot allocation template may include but is not limited to a type for a case in which a controller node has a priority, a type for a case in which an uplink node has a priority, a type for a case in which an upgrade service has a priority, a type for a case of low power consumption, and the like.

Bytes 16 to 20 are reserved (reserved) bytes, which can be allocated based on actual requirements.

A template type of the byte 15 is template type information, which is a type of template identification information. In another embodiment, the template identification information of the byte 15 may be a template number.

In the MAP frame, encoding manners of the PHY HDR field and the PHY HDR+ field are different from an encoding manner of the payload field. Anti-interference capabilities of the PHY HDR field and the PHY HDR+ field are stronger than that of the payload field. The resource scheduling message is included in the PHY HDR+ field, so that an anti-interference capability of the resource scheduling message can be improved.

The MAP frame shown in FIG. 8 is merely an example. In another embodiment, the MAP frame may include a preamble, a PHY HDR, and a payload. The resource scheduling message may be included in a PHY HDR field or a payload field.

Because of templatization of resource scheduling, in comparison with carrying time slot allocation information corresponding to each node, a length of resource scheduling information that needs to be carried in the MAP frame is shortened from 1500 bytes to 16 bytes, and a length of the MAP frame is greatly shortened. Even if the resource scheduling information is carried in the payload field, the anti-interference capability of the resource scheduling message can also be improved.

In some embodiments, a 1-bit (bit) flag bit may identify, in the PHY HDR field of the MAP frame, whether the MAP frame carries the template identification information or the time slot allocation information corresponding to each node. For example, in some MAC cycles, a preconfigured time slot allocation template may be used. In this case, the MAP frame may include the preamble field, the PHY HDR field, and the PHY HDR+ field. A flag bit in the PHY HDR field may be "1", to identify that the MAP frame carries the PHY HDR+ field, and the PHY HDR+ field includes the template identification information. In some other MAC cycles, the preconfigured time slot allocation template may not be applicable. In this case, the MAP frame may carry the time slot allocation information corresponding to each node. For example, the MAP frame may include the preamble field, the PHY HDR field, and the payload field. The flag bit in the PHY HDR field may be "0", to identify that the MAP frame carries the payload field, and the payload field includes the time slot allocation information corresponding to each node.

In the foregoing embodiments, the resource scheduling message is carried in the MAP frame for transmission. In some other embodiments, the resource scheduling message may alternatively be carried in another type of a message (message) similar to the MAP frame for transmission. For example, the resource scheduling message may be carried in a data frame or a management frame for transmission. If the resource scheduling message is carried in the data frame for transmission, the template identification information may be included in a PHY HDR field, a PHY HDR+ field, or a payload field of the data frame. If the resource scheduling message is carried in the management frame for transmission, the template identification information may be included in a PHY HDR field, a PHY HDR+ field, or a payload field of the management frame.

S703: The node 13 transmits the resource scheduling message to the lower-level node.

In a transmission time slot of the node 13 in the n^{th} MAC cycle, the node 13 transmits the resource scheduling message to lower-level nodes, that is, a node 15, a node 16, and a node 17.

The transmission time slot of the node 13 is determined by the node 13 based on a time slot allocation template used in the n^{th} MAC cycle. The time slot allocation template used in the n^{th} MAC cycle may be a time slot allocation template specified by the template identification information carried in the resource scheduling message transmitted by the node 10 to the node 13 in a specific MAC cycle before the n^{th} MAC cycle. For example, in an (n-1)^{th} MAC cycle or an (n-k)^{th} MAC cycle, the node 13 receives the resource scheduling message transmitted by the node 10, the template identification information carried in the resource scheduling message is a template number 0, and the template effective cycle information carried in the resource scheduling message indicates that a template with a corresponding number takes effect in the n^{th} MAC cycle. In this case, the node 13 may determine that the template 0 takes effect in the n^{th} MAC cycle.

In the n^{th} MAC cycle, the node 13 determines the transmission time slot of the node 13 based on indication information that is included in the template 0 and that is used for allocating a time slot to each node. The node 13 may select to transmit, in any transmission time slot of the node 13, the resource scheduling message to the node 15, the node 16, and the node 17. A specific process in which the node 13 determines the transmission time slot corresponding to the node 13 is described in detail below. After receiving the resource scheduling message, the node 15, the node 16, and the node 17 also determine, based on the resource scheduling message, transmission time slots respectively corresponding to the node 15, the node 16, and the node 17. For execution of a process in which the node 15, the node 16, and the node 17 determine the transmission time slots respectively corresponding to the node 15, the node 16, and the node 17, refer to a process in which the node 13 determines the transmission time slot corresponding to the node 13. The node 16 and the node 17 are lower-level relay nodes of the node 13. After receiving the resource scheduling message, the node 16 transmits the resource scheduling message to a node 18 in a transmission time slot of the node 16 in the n^{th} MAC cycle. After receiving the resource scheduling message, the node 17 transmits the resource scheduling message to the node 19 in a transmission time slot of the node 17 in the n^{th} MAC cycle.

S704: The node 13 determines a target time slot allocation template from at least one time slot allocation template based on the template identification information carried in the resource scheduling message.

The node 13 receives the resource scheduling message transmitted by the node 10, and determines the target time slot allocation template from a stored time slot allocation template based on the template identification information carried in the resource scheduling message.

In some embodiments, the node 13 may store a correspondence between the template type information and the time slot allocation template. The template identification information may be the template type information. The node 13 may find the target time slot allocation template from a plurality of stored time slot allocation templates based on the template type information.

In some other embodiments, the node 13 may store a correspondence between the template number and the time slot allocation template. The template identification information may be the template number. The node 13 may find the target time slot allocation template from the plurality of stored time slot allocation templates based on the template number.

In another embodiment, an execution sequence number of step S703 and an execution sequence number of step S704 are interchangeable, or step S703 and step S704 may be simultaneously executed by different components.

S705: The node 13 determines the transmission time slot of the node 13 based on the target time slot allocation template.

In the MAC cycle indicated by the template effective cycle information carried in the resource scheduling information, the node 13 determines, based on the target time slot allocation template, the transmission time slot used by the node 13 for data transmission. The transmission time slot may include a data transmitting time slot or a data receiving time slot, and the resource scheduling information is resource scheduling information received in the n^{th} MAC cycle.

For example, it is assumed that the node 13 receives the resource scheduling information in the n^{th} MAC cycle. The resource scheduling information carries the template type information and the template effective cycle information, the template type information is the type for the case in which an uplink node has a priority, and a time slot allocation template corresponding to the type for the case in which an uplink node has a priority is a template 2, that is, the target time slot allocation template is the template 2, and the template effective cycle information is 1. In this case, the resource scheduling information indicates that the template 2 takes effect in an (n+1)^{th} MAC cycle.

In the (n+1)^{th} MAC cycle, the node 13 may use, as the transmission time slot of the node 13, a transmission time slot in a CFTXOP configured in the template 2 for the node 13; or the node 13 may use, as the transmission time slot of the node 13, a CFTS configured in the template 2 for the node 13 in an STXOP; or when data transmission needs to be performed, the node 13 may further use, as the transmission time slot of the node 13 in a preemption manner, a CBTS in an STXOP configured in the template 2.

The node 13 performs data transmitting or data receiving in the determined transmission time slot corresponding to the node 13. For example, in the transmission time slot of the node 13, the node 13 may transmit, to the node 15, the node 16, and the node 17, the resource scheduling information received in the (n+1)^{th} MAC cycle.

In a conventional technology, the DM carries the time slot allocation information corresponding to each node in the MAP frame, and transmits the MAP frame to each node in a power line communication system. Because a power line is not a line specially designed for communication, various electrical payloads added by a user on the line cause real-time changes of load impedance and noise interference, a power line channel is vulnerable to the real-time change of the noise interference. However, an anti-interference capability of a long MAP frame is poor. If a specific node receives the MAP frame and cannot completely parse the MAP frame correctly, that is, the MAP frame is decoded abnormally, in a next MAC cycle, data transmission of the node is affected.

In embodiments of this application, the MAP frame carries the template identification information, so that a length of the MAP frame can be greatly shortened, an anti-interference capability and robustness that are of the MAP frame are improved, a phenomenon that data transmission between nodes is affected due to abnormal decoding of the MAP frame is reduced, and performance loss of a communication system is reduced.

In addition, the length of the MAP frame is greatly shortened, and a length of a transmission time slot of the MAP frame may be shortened from 2.5 ms to 0.5 ms. This reduces a bandwidth waste caused by the transmission time slot of the MAP frame, improves utilization of a MAC cycle, and improves benefits of power line communication.

The resource scheduling message may not only be carried in the MAP frame, but also be carried in the data frame or the management frame and transmitted to nodes for a plurality of times. To be specific, because the length of the resource scheduling message is short, in one MAC cycle, when the MAP frame is transmitted between the nodes, the resource scheduling message may be carried, and when the data frame or the management frame is transmitted between the nodes, the resource scheduling message may also be carried, so that a quantity of times of transmitting the resource scheduling message can be increased. If a specific node unsuccessfully receives the MAP frame or unsuccessfully decodes the resource scheduling message in the MAP frame, the node may further obtain the resource scheduling message by decoding in another frame, for example, the data frame or the management frame. This can reduce a case in which the node unsuccessfully receives the resource scheduling information, or the node successfully receives the resource scheduling information but cannot successfully decode the resource scheduling message, and further improve robustness of the resource scheduling message.

The communication method provided in embodiments of this application is not only applicable to a PLC network, but also applicable to another wired communication network or wireless communication network.

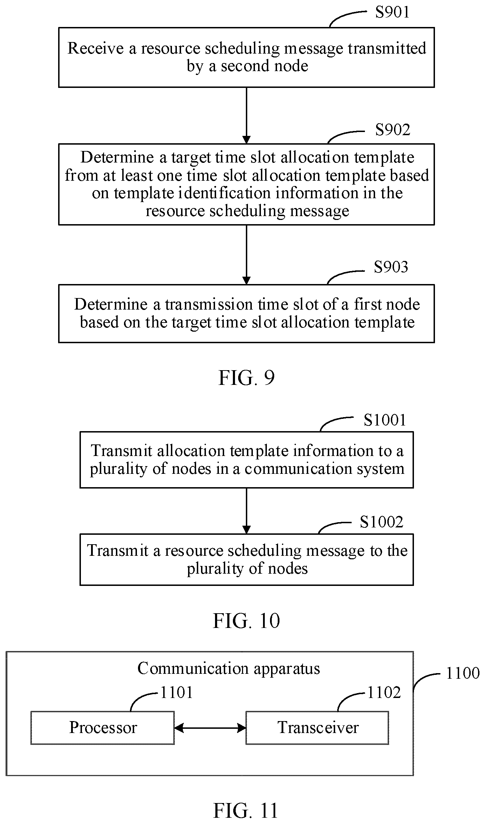

Based on a same inventive concept as that of the foregoing embodiments, an embodiment of this application provides a communication method. The method may be performed by a first node. The first node may be any node other than a DM in a communication system. For example, the first node may be any node from the node 1 to the node N in FIG. 1, or the first node may be any node other than the node 10 in FIG. 2. As shown in FIG. 9, the method may include the following steps.

S901: Receive a resource scheduling message transmitted by a second node.

The second node is an upper-level node of the first node. For example, if the first node is the node 2 in FIG. 1, the second node may be the node 0 in FIG. 1. If the first node is the node 18 in FIG. 2, the second node may be the node 16 in FIG. 1.

The resource scheduling message may be time slot indication information based on a TDMA system, or time-frequency resource block allocation indication information based on an OFDMA system. The resource scheduling message includes template identification information, and the template identification information is template type information or a template number.

In some embodiments, the resource scheduling message may be carried in a MAP frame, and the template identification information is included in a physical frame header, an additional physical frame header field, or a physical frame payload field of the MAP frame.

In some other embodiments, the resource scheduling message is carried in a data frame, and the template identification information is included in a physical frame header, an additional physical frame header field, or a physical frame payload field of the data frame.

In some other embodiments, the resource scheduling message is carried in a management frame, and the template identification information is included in a physical frame header, an additional physical frame header field, or a physical frame payload field of the management frame.

S902: Determine a target time slot allocation template from at least one time slot allocation template based on the template identification information in the resource scheduling message.

The at least one time slot allocation template is stored in the first node, and each time slot allocation template includes indication information for allocating time slots to a plurality of nodes in the communication system. Optionally, the at least one time slot allocation template may be obtained and stored by the first node by receiving allocation template information transmitted by any node in the communication system and obtaining at least one time slot allocation template carried in the allocation template information.

For example, the allocation template information may be carried in the MAP frame, the MAP frame may include template location information, and the template location information indicates a location of each time slot allocation template in the allocation template information.

S903: Determine a transmission time slot of the first node based on the target time slot allocation template.

In an effective MAC cycle corresponding to the target time slot allocation template, the first node may determine the transmission time slot of the first node based on the target time slot allocation template. The transmission time slot may include a data transmitting time slot or a data receiving time slot.

For example, the first node may use, as the transmission time slot of the first node, a transmission time slot in a CFTXOP configured in the target time slot allocation template for the first node; or the first node may use, as the transmission time slot of the first node, a CFTS configured in the target time slot allocation template for the first node in an STXOP; or when data transmission needs to be performed, the first node may further use, as the transmission time slot of the first node in a preemption manner, a CBTS in an STXOP configured in the target time slot allocation template.

If the first node is a relay node, the first node may further transmit the resource scheduling message to a third node in the transmission time slot of the first node. The third node is a lower-level node of the first node.

Based on a same inventive concept as that of the foregoing embodiments, an embodiment of this application further provides a communication method. The method may be performed by a domain master node in a communication system. For example, the method may be performed by the node 0 in FIG. 1, or the method may be performed by the node 10 in FIG. 2. The communication method may include: transmitting a resource scheduling message to a plurality of nodes in the communication system. The resource scheduling message includes template identification information, and the template identification information indicates a time slot allocation template for allocating time slots to the plurality of nodes.

In some embodiments, the communication method may further include: transmitting allocation template information to the plurality of nodes. As shown in FIG. 10, the method may specifically include the following steps.

S1001: Transmit the allocation template information to the plurality of nodes in the communication system.

The allocation template information carries at least one time slot allocation template, so that each node stores the at least one time slot allocation template carried in the allocation template information.

S1002: Transmit the resource scheduling message to the plurality of nodes.

In different MAC cycles, the domain master node may transmit different resource scheduling messages to nodes. The resource scheduling message includes the template identification information, and the template identification information indicates the time slot allocation template for allocating the time slots to the plurality of nodes.

In some other embodiments, a time slot allocation template stored in each node may not be delivered by the domain master node, but may be delivered by another node, or may be obtained from a removable hard disk or another storage medium through a data line.

Because the resource scheduling message includes the template identification information but does not need to include time slot allocation information corresponding to each node, and a byte length occupied by the template identification information is far less than a byte length occupied by the time slot allocation information corresponding to each node, a length of the resource scheduling message is shortened, and even if a quantity of nodes in a PLC network increases, the length of the resource scheduling message does not increase. Therefore, communication resources occupied for transmission of the resource scheduling message can be reduced, so that more communication resources can be used for data transmission between the nodes, and effective utilization of the communication resources is improved.

Based on a same inventive concept as that of the foregoing embodiments, an embodiment of this application further provides a communication apparatus. The communication apparatus is applicable to a first node, and the first node may be any node other than a DM in a communication system. The communication apparatus may be configured to implement functions of the foregoing method embodiments, and therefore, can implement beneficial effects of the foregoing method embodiments.

The communication apparatus may include a receiving unit and a determining unit. The communication apparatus is configured to implement functions of the method embodiments shown in FIG. 9. When the communication apparatus is configured to implement the functions of the method embodiments shown in FIG. 9, the receiving unit may be configured to perform S901, and the determining unit may be configured to perform S902 and S903. For example, the receiving unit is configured to receive a resource scheduling message transmitted by a second node. The second node is an upper-level node of the first node, and the resource scheduling message includes template identification information. The determining unit is configured to determine a target time slot allocation template from at least one time slot allocation template based on the template identification information, and determine a transmission time slot of the first node based on the target time slot allocation template. The time slot allocation template includes indication information for allocating time slots to a plurality of nodes in the communication system, and the transmission time slot includes a data transmitting time slot or a data receiving time slot.

In a possible implementation, the template identification information is template type information or a template number.

In a possible implementation, the resource scheduling message is time slot indication information based on a TDMA system, or time-frequency resource block allocation indication information based on an OFDMA system.

In a possible implementation, the resource scheduling message is carried in a medium access plan MAP frame, and the template identification information is included in a physical frame header, an additional physical frame header field, or a physical frame payload field of the MAP frame; or
the resource scheduling message is carried in a data frame, and the template identification information is included in a physical frame header, an additional physical frame header field, or a physical frame payload field of the data frame; or
the resource scheduling message is carried in a management frame, and the template identification information is included in a physical frame header, an additional physical frame header field, or a physical frame payload field of the management frame.

In a possible implementation, the receiving unit is further configured to receive allocation template information transmitted by any node in the communication system, where the allocation template information carries at least one time slot allocation template, and stores the at least one time slot allocation template in a memory.

In a possible implementation, the allocation template information is carried in a MAP frame, the MAP frame includes template location information, and the template location information indicates a location of each time slot allocation template in the allocation template information.

In a possible implementation, if the first node is a relay node, the determining unit may be further configured to transmit the resource scheduling message to a third node in the data transmission time slot of the first node, where the third node is a lower-level node of the first node.

Based on a same inventive concept as that of the foregoing embodiments, an embodiment of this application further provides a communication apparatus. The communication apparatus is applicable to a domain master node in a communication system. The communication apparatus may be configured to implement functions of the foregoing method embodiments, and therefore, can implement beneficial effects of the foregoing method embodiments.

The communication apparatus may include a transmitting unit, configured to transmit a resource scheduling message to a plurality of nodes in the communication system. The resource scheduling message includes template identification information, and the template identification information indicates a time slot allocation template for allocating time slots to the plurality of nodes.

In a possible implementation, the transmitting unit may be further configured to transmit the resource scheduling message to the plurality of nodes in the communication system. The resource scheduling message includes the template identification information, and the template identification information indicates the time slot allocation template for allocating the time slots to the plurality of nodes.

Based on a same inventive concept as that of the foregoing embodiments, an embodiment of this application further provides a communication apparatus. The communication apparatus may be any node in a communication system, or is applicable to any node in the communication system. The communication apparatus may be configured to implement functions of the foregoing method embodiments, and therefore, can implement beneficial effects of the foregoing method embodiments.

FIG. 11 is a schematic diagram of a structure of a communication apparatus. Refer to FIG. 11. The communication apparatus 1100 may include a processor 1101 and a transceiver 1102 connected to the processor 1101.

Optionally, the processor 1101 and the transceiver 1102 may be connected to each other through a bus. The processor 1101 may be a general-purpose processor, for example, a microprocessor, or another conventional processor. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

In an embodiment, the communication apparatus shown in FIG. 11 may be the foregoing first node, or is applicable to the foregoing first node. The transceiver 1102 is configured to receive, under control of the processor 1101, a resource scheduling message transmitted by a second node, where the second node is an upper-level node of the first node, and the resource scheduling message includes template identification information. The processor 1101 is configured to: determine a target time slot allocation template from at least one time slot allocation template based on the template identification information, where the time slot allocation template includes indication information for allocating time slots to a plurality of nodes in a communication system, and determine a transmission time slot of the first node based on the target time slot allocation template, where the transmission time slot includes a data transmitting time slot or a data receiving time slot.

In a possible implementation, the template identification information is template type information or a template number.

In a possible implementation, the resource scheduling message is time slot indication information based on a time division multiple access TDMA system, or time-frequency resource block allocation indication information based on an orthogonal frequency division multiple access OFDMA system.

In a possible implementation, the resource scheduling message is carried in a medium access plan MAP frame, and the template identification information is included in a physical frame header, an additional physical frame header field, or a physical frame payload field of the MAP frame; or
the resource scheduling message is carried in a data frame, and the template identification information is included in a physical frame header, an additional physical frame header field, or a physical frame payload field of the data frame; or
the resource scheduling message is carried in a management frame, and the template identification information is included in a physical frame header, an additional physical frame header field, or a physical frame payload field of the management frame.

If the first node is a relay node, the transceiver 1102 may be further configured to transmit, under the control of the processor 1101, the resource scheduling message to a third node in the data transmission time slot of the first node, where the third node is a lower-level node of the first node.

In another embodiment, the communication apparatus shown in FIG. 11 may be the foregoing domain master node, or is applicable to the foregoing domain master node. The transceiver 1102 is configured to transmit a resource scheduling message to a plurality of nodes in a communication system under control of the processor 1101. The resource scheduling message includes template identification information, and the template identification information indicates a time slot allocation template for allocating time slots to the plurality of nodes.

In a possible implementation, the transceiver 1102 may be further configured to transmit allocation template information to the plurality of nodes in the communication system under the control of the processor 1101, where the allocation template information carries at least one time slot allocation template, so that each node stores the at least one time slot allocation template carried in the allocation template information, to search for a target time slot allocation template based on the template identification information carried in the received resource scheduling message.

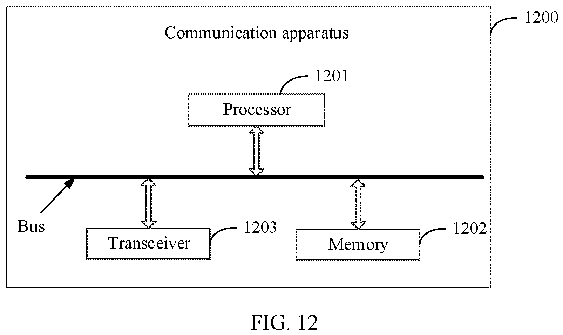

In some embodiments, the communication apparatus may further include a memory. Refer to FIG. 12. A communication apparatus 1200 may include a processor 1201, a memory 1202, and a transceiver 1203. The processor 1201, the memory 1202, and the transceiver 1203 are connected to each other.

Optionally, the processor 1201, the memory 1202, and the transceiver 1203 are connected to each other through a bus, and the bus may be a PCI bus, an EISA bus, or the like. The bus may be classified into an address bus, a data bus, a control bus, and the like. For ease of representation, only one bold line is used for representing the bus in FIG. 12, but this does not mean that there is only one bus or only one type of bus.

It may be understood that, the memory 1202 is configured to store program instructions, data, and the like. Specifically, the program instructions may include program code, and the program code includes computer operation instructions. The memory 1202 may include a random access memory (random access memory, RAM), or may include a non-volatile memory (non-volatile memory), for example, at least one magnetic disk memory.

In an embodiment, the communication apparatus shown in FIG. 12 may be the foregoing first node, or is applicable to the foregoing first node. The memory 1202 is configured to store program code, and the processor 1201 may implement, based on the program code obtained from the memory 1202, the steps of the communication method shown in FIG. 9.

The transceiver 1203 may receive and transmit data under control of the processor 1201. In addition to receiving a resource scheduling message transmitted by a second node, the transceiver 1203 may be further configured to receive, under the control of the processor 1201, allocation template information transmitted by any node in a communication system, where the allocation template information carries at least one time slot allocation template. The memory 1202 may be further configured to store the at least one time slot allocation template.

In another embodiment, the communication apparatus shown in FIG. 12 may be the foregoing domain master node, or is applicable to the foregoing domain master node. The memory 1202 is configured to store program code, and the processor 1201 may implement, based on the program code obtained from the memory 1202, the steps of the communication method shown in FIG. 10.

Based on a same inventive concept as that of the foregoing embodiments, an embodiment of this application further provides a communication system. The communication system may include a domain master node and a plurality of other nodes. The other nodes may include a relay node and an ordinary node, and each node is a communication device or a communication apparatus in the communication system. The communication system shown in FIG. 1 may include one domain master node and a plurality of ordinary nodes. The communication system shown in FIG. 2 may include one domain master node, a plurality of relay nodes, and a plurality of ordinary nodes. It may also be understood that, the communication system includes a plurality of communication apparatuses shown in FIG. 11 or FIG. 12, and the communication apparatus may be configured to implement functions of the foregoing method embodiments, so that beneficial effects of the foregoing method embodiments can be implemented.

Based on the foregoing embodiments, an embodiment of this application further provides a computer program product, including a computer program or instructions. When the computer program or the instructions are run on a computer, the computer is enabled to perform any communication method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform any communication method provided in the foregoing embodiments.

The storage medium may be any available medium that can be accessed by the computer. The following provides an example but does not impose a limitation: The computer-readable medium may include a RAM, a ROM, an EEPROM, a CD-ROM or another optical disc storage, a magnetic disk storage medium or another magnetic storage device, or any other medium that can carry or store expected program code in a form of instructions or a data structure and that is accessed by a computer.

Based on the foregoing embodiments, an embodiment of this application further provides a chip. The chip is configured to read a computer program stored in a memory, to implement any communication method provided in the foregoing embodiments.

Based on the foregoing embodiments, an embodiment of this application further provides a chip system. The chip system includes a processor, configured to support a computer apparatus in implementing functions related to any node in the foregoing embodiments. In a possible design, the chip system further includes a memory. The memory is configured to store a program and data that are necessary for the computer apparatus. The chip system may include a chip, or may include a chip and another discrete device.

In conclusion, embodiments of this application provide a communication method and an apparatus. A resource scheduling message carries template identification information, and the template identification information indicates a target time slot allocation template to be used. Because a byte length occupied by the template identification information is far less than a byte length occupied by time slot allocation information corresponding to each node, a length of the resource scheduling message can be greatly shortened, and even if a quantity of nodes in a communication network increases, the length of the resource scheduling message does not increase. Therefore, communication resources that need to be occupied for transmission of the resource scheduling message can be reduced, so that more communication resources can be used for data transmission between nodes, and effective utilization of the communication resources is improved.

A person skilled in the art should understand that embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a magnetic disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

These computer program instructions may alternatively be loaded onto a computer or another programmable data processing device, so that a series of operation steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A communication method, applied to a first node in a communication system, wherein the method comprises:
receiving a resource scheduling message transmitted by a second node, wherein the second node is an upper-level node of the first node, and the resource scheduling message comprises template identification information;
determining a target time slot allocation template from at least one time slot allocation template based on the template identification information, wherein the time slot allocation template comprises indication information for allocating time slots to a plurality of nodes in the communication system; and
determining a transmission time slot of the first node based on the target time slot allocation template, wherein the transmission time slot comprises a data transmitting time slot or a data receiving time slot.

2. The method according to claim 1, wherein the template identification information is template type information or a template number.

3. The method according to claim 1 or 2, wherein the resource scheduling message is time slot indication information based on a time division multiple access TDMA system, or time-frequency resource block allocation indication information based on an orthogonal frequency division multiple access OFDMA system.

4. The method according to any one of claims 1 to 3, wherein the resource scheduling message is carried in a medium access plan MAP frame, and the template identification information is comprised in a physical frame header, an additional physical frame header field, or a physical frame payload field of the MAP frame.

5. The method according to any one of claims 1 to 3, wherein the resource scheduling message is carried in a data frame, and the template identification information is comprised in a physical frame header, an additional physical frame header field, or a physical frame payload field of the data frame.

6. The method according to any one of claims 1 to 3, wherein the resource scheduling message is carried in a management frame, and the template identification information is comprised in a physical frame header, an additional physical frame header field, or a physical frame payload field of the management frame.

7. The method according to any one of claims 1 to 6, wherein before the receiving a resource scheduling message that is transmitted by a second node and that comprises information about time slot allocation template, the method further comprises:
receiving allocation template information transmitted by any node in the communication system, wherein the allocation template information carries the at least one time slot allocation template; and
storing the at least one time slot allocation template.

8. The method according to claim 7, wherein the allocation template information is carried in a MAP frame, wherein the MAP frame comprises template location information, and the template location information indicates a location of each time slot allocation template in the allocation template information.

9. The method according to any one of claims 1 to 8, wherein the first node is a relay node, and the method further comprises:
transmitting the resource scheduling message to a third node in the transmission time slot of the first node, wherein the third node is a lower-level node of the first node.

10. A communication method, applied to a domain master node in a communication system, wherein the method comprises:
transmitting a resource scheduling message to a plurality of nodes in the communication system, wherein the resource scheduling message comprises template identification information, and the template identification information indicates a time slot allocation template for allocating time slots to the plurality of nodes.

11. The method according to claim 10, wherein before the transmitting a resource scheduling message to a plurality of nodes in the communication system, the method further comprises:
transmitting allocation template information to the plurality of nodes, wherein the allocation template information carries at least one time slot allocation template.

12. A communication apparatus, applied to a first node in a communication system, wherein the communication apparatus comprises a transceiver and a processor, wherein
the transceiver is configured to receive, under control of the processor, a resource scheduling message transmitted by a second node, wherein the second node is an upper-level node of the first node, and the resource scheduling message comprises template identification information; and
the processor is configured to: determine a target time slot allocation template from at least one time slot allocation template based on the template identification information, wherein the time slot allocation template comprises indication information for allocating time slots to a plurality of nodes in the communication system; and
determine a transmission time slot of the first node based on the target time slot allocation template, wherein the transmission time slot comprises a data transmitting time slot or a data receiving time slot.

13. The apparatus according to claim 12, wherein the template identification information is template type information or a template number.

14. The apparatus according to claim 12 or 13, wherein the resource scheduling message is time slot indication information based on a time division multiple access TDMA system, or time-frequency resource block allocation indication information based on an orthogonal frequency division multiple access OFDMA system.

15. The apparatus according to any one of claims 12 to 14, wherein the resource scheduling message is carried in a medium access plan MAP frame, and the template identification information is comprised in a physical frame header, an additional physical frame header field, or a physical frame payload field of the MAP frame; or
the resource scheduling message is carried in a data frame, and the template identification information is comprised in a physical frame header, an additional physical frame header field, or a physical frame payload field of the data frame; or
the resource scheduling message is carried in a management frame, and the template identification information is comprised in a physical frame header, an additional physical frame header field, or a physical frame payload field of the management frame.

16. The apparatus according to any one of claims 12 to 15, wherein the communication apparatus further comprises a memory, and the transceiver is further configured to:
before receiving the resource scheduling message that is transmitted by the second node and that comprises information about the time slot allocation template, receive, under the control of the processor, allocation template information transmitted by any node in the communication system, wherein the allocation template information carries at least one time slot allocation template; and
the memory is configured to store the at least one time slot allocation template under the control of the processor.

17. The apparatus according to claim 16, wherein the allocation template information is carried in a MAP frame, the MAP frame comprises template location information, and the template location information indicates a location of each time slot allocation template in the allocation template information.

18. The apparatus according to any one of claims 12 to 17, wherein the first node is a relay node, and the transceiver is further configured to transmit the resource scheduling message to a third node in the transmission time slot of the first node under the control of the processor, wherein the third node is a lower-level node of the first node.

19. A communication apparatus, comprising a transceiver and a processor, wherein
the transceiver is configured to transmit a resource scheduling message to a plurality of nodes in a communication system under control of the processor, wherein the resource scheduling message comprises template identification information, and the template identification information indicates a time slot allocation template for allocating time slots to the plurality of nodes.

20. The apparatus according to claim 19, wherein the transceiver is further configured to: before transmitting the resource scheduling message to the plurality of nodes in the communication system, transmit allocation template information to the plurality of nodes under the control of the processor, wherein the allocation template information carries at least one time slot allocation template.

21. A communication system, comprising:
a plurality of communication apparatuses according to any one of claims 12 to 18; and
the communication apparatus according to claim 19 or 20.

22. A computer-readable storage medium, storing computer-executable instructions, wherein the computer-executable instructions are used to enable a computer to perform the method according to any one of claims 1 to 9, or perform the method according to claim 10 or 11.

23. A computer program product, comprising computer-executable instructions, wherein the computer-executable instructions are used to enable a computer to perform the method according to any one of claims 1 to 9, or perform the method according to claim 10 or 11.
